Europäisches Patentamt

European Patent Office

Office européen des brevets

(11) Publication number : **0 467 594 A1**

# (12) EUROPEAN PATENT APPLICATION

(21) Application number : **91306298.0**

(22) Date of filing : **11.07.91**

(51) Int. Cl.⁵ : **F42B 3/04, B64D 25/14, B63C 9/22**

(30) Priority : **14.07.90 GB 9015627**

(43) Date of publication of application :
**22.01.92 Bulletin 92/04**

(84) Designated Contracting States :
**DE FR NL**

(71) Applicant : **KIDDE-GRAVINER LIMITED**
**Pentagon House Sir Frank Whittle Road**
**Derby DE2 4EE (GB)**

(72) Inventor : **James, Frederick John**
**7 Ardingly**
**Bracknell, Berkshire (GB)**
Inventor : **Ball, David Nicholas**
**50 Queens Road**
**Windsor, Berkshire, SL4 3BH (GB)**

(74) Representative : **Foster, David Martyn et al**
**MATHISEN MACARA & CO. The Coach House**
**6-8 Swakeleys Road**
**Ickenham Uxbridge UB10 8BZ (GB)**

(54) **Gas supply systems and methods.**

(57)    A pyrotechnic gas-generating source is used to generate gas under pressure for inflating an inflatable object 5 such as an inflatable water craft or an aircraft escape chute. The pyrotechnically generated gas passes through a valve 12 and an aspirator 14 where it causes atmospheric air to be drawn in and fed into the object 5 to augment the inflation process. The efficiency of the aspirator is significantly dependent on the pressure of the gas through the aspirator, the efficiency rising rapidly from a low value at low pressure to a maximum and thence falling away. The pressure of the gas from the pyrotechnic gas-generating source 6 is such that the gas pressure through the aspirator is held at the value which promotes maximum aspiration efficiency.

Fig.1.

EP 0 467 594 A1

The invention relates to a gas supply system, comprising a pyrotechnic gas-generating source for supplying gas under pressure through aspirating means located in an ambient atmosphere so as to cause the aspirator means to draw in gas from the ambient atmosphere which augments the supply of gas.

The invention also relates to a method of inflating an inflatable object, comprising the steps of pyrotechnically generating under pressure a supply of gas, feeding the gas at a controlled pressure in a partially confined path within the atmosphere so as to draw in atmospheric air by aspiration, and feeding the gas and the drawn-in atmospheric air into the object to be inflated.

Such a system and method are known from US-A-4 877 264, and also from US-A-4 909 549.

The use of the aspirator means significantly augments the supply of gas under pressure and provides greater efficiency of gas generation. However, such known systems and methods do not make optimum use of the aspirator means, and this is the problem which the invention aims to overcome.

In accordance with the invention, therefore, such a system is characterised in that the pressure of the gas supplied by the pyrotechnic source is selected so as substantially to correspond, for a significant proportion of the duration of gas generation, to the value giving maximum efficiency of the aspirator means.

Furthermore, in accordance with the invention such a method is characterised in that the controlled pressure of the gas is substantially constant during its generation and corresponds to the value providing maximum efficiency of aspiration.

Inflation systems and methods according to the invention will now be described, by way of example only, with reference to the accompanying diagrammatic drawings in which:

Figure 1 is a block diagram of one of the systems;

Figure 2 is a graph illustrating a plot of the efficiency of an aspirator in the system of Figure 1 against gas pressure; and

Figure 3 is a plot of the pressure of the gas generated in the system against time.

The system to be described is for inflating an inflatable object 5 which may, for example, be a waterborne craft such as a life raft or rubber dinghy or which may be an escape chute for an aircraft; however, the system may be used to inflate other types of inflatable object. The object 5 is inflated under the action of a gas source 6. Gas source 6 is a pyrotechnic gas source described in more detail below. When activated by means of an ignition signal on a line 8, it produces a supply of gas under pressure which is output along a pipe 10 to a valve 12 whence it passes (via the opened valve) through an aspirator 14 and thence via a pipe 16 into the object 5.

The pyrotechnic gas generator may take any suitable form for generating a suitable gas by pyrotechnic means. For example, the pyrotechnic gas generator 6 could comprise a suitable gas generating composition 20 in grannular powder, tablet or pellet form which can be ignited by a suitable igniter 22 to cause generation of gas. The generated gas passes into the outlet pipe 10 via a suitable filter 24.

Examples of suitable pyrotechnic gas-generating compounds are disclosed in United Kingdom patent Specification No. 2174179 whose contents are accordingly incorporated herein by reference. The compounds shown in that specification generate nitrogen. One such compound comprises sodium azide which, when heated above 600K, decomposes to produce nitrogen gas. The sodium azide may be combined with ferric oxide to act as an oxidising agent in order to react with the sodium metal also produced. However, other suitable pyrotechnic gas-generating substances may be used instead, not only for generating nitrogen as the gas but also for generating other suitable gases such as carbon dioxide and gaseous water.

The compound 20 is selected, as is its mass in relation to the other characteristics of the gas generator 6, so as to produce a known and controlled pressure of emitted gas. The emitted gas passes through the opened valve 12 into the aspirator and thence through pipe 6 into the inflatable object.

In passing through the aspirator 14, the gas draws in air from the surrounding atmosphere and passes this air into the inflatable object so as to augment the inflation process considerably.

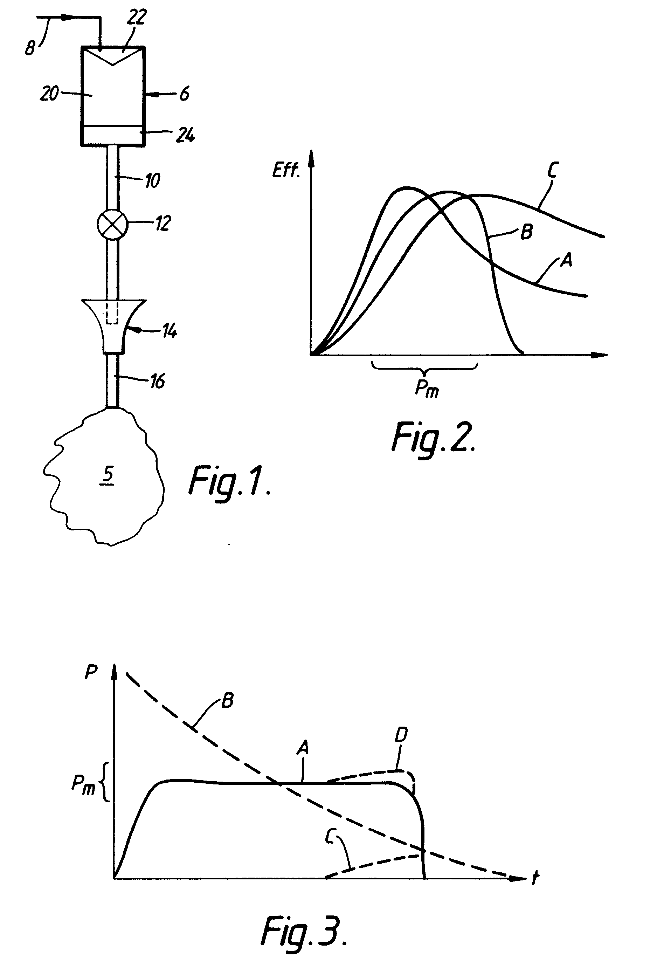

The graphs of Figures 2 and 3 further explain the operation of the system.

Figure 2 plots the efficiency of the aspirator against the pressure of the gas passing into the aspirator. Three curves A,B and C are shown. For present purposes, aspirator efficiency is defined as the ratio of the volume of air drawn in to the aspirator from the atmosphere to the volume of gas passing into the aspirator from the gas source 6. For each of the three curves, the efficiency is seen to be very low for low gas pressures, but rises quite rapidly to a maximum efficiency value. The efficiency may then fall off quite rapidly (curve A), less rapidly (curve B) or hardly at all (curve C). Other shapes for the curve may exist under other circumstances or for various aspirator designs. In each case, however, the aspiration efficiency can be expected to be low at very low pressures and then build up to a maximum from which it falls off as the further increases in gas pressure can no longer further decrease the aspirator pressure.

Figure 3 shows on the vertical axis the pressure P of the gas emitted from the gas source 12 into the aspirator 14. Time t is plotted on the horizontal axis.

From Figure 2, it is apparent that there is a gas pressure $P_m$ at which maximum aspiration efficiency is achieved, the pressure $P_m$ for a particular aspirator lying within a narrow range of pressures (as shown by any one of the slightly differing types of curve A,B and C shown in Figure 2). This narrow range is shown indicated on the vertical axis in Figure 3. Therefore, by selecting the parameters of the gas-generating source 6 (Fig. 1) such that the generated gas has substantially constant pressure which lies within the narrow range $P_m$, the inflation system operates substantially continuously at maximum efficiency as shown by curve A. Such an arrangement therefore contrasts with known arrangements in which, instead of a pyrotechnic gas-generating source 6, a container of gas stored under pressure is used. When such stored gas is released, the pressure is initially very high but thereafter falls quite rapidly as shown by the curve dotted at B in Figure 3. The gas pressure is therefore only momentarily at the correct value ($P_m$) to give maximum aspiration efficiency - instead of being substantially continuously at this value as is achieved by the apparatus illustrated in Figure 1.

It is possible to obtain from the type of system shown in Figure 1 a substantial increase in aspiration efficiency as compared with the known system using stored gas as the gas source. Because the total weight of an unaspirated system using a pyrotechnic gas generator is of the same order as an equivalent system using gas stored under pressure, a system of the type shown in Figure 1 can be constructed with a weight very substantially reduced as compared with that of an example of the known aspirated system with the same inflation capability. Weight-saving is obviously highly important in many of the applications of inflation systems.

The gas generated by the pyrotechnic gas generator 6 will be at a relatively high temperature, because of the manner in which it is generated. It would be unsatisfactory to allow gas at high temperature to inflate the object 5: the heat might be damaging to the material of the object 5 and, in addition, the object would deflate at least slightly as the hot gas inside it cooled. However, the effect of the aspirator, in mixing atmospheric air with the hot gas, is to cool the gas very substantially thus augmenting the effect of any adiabatic cooling which may have taken place; this therefore avoids the need for a heat exchanger with its consequent significant weight.

As the inflatable object becomes inflated, a back-pressure will arise because of the pressure build-up within the object and the effect of the membrane which forms the wall of the object. The build-up of this back-pressure is shown in curve C in Figure 3. This back-pressure has to be overcome by the inflating pressure and this can be achieved by arranging for the gas generating source 6 to increase the inflating pressure as shown at D at the end of the inflation process, such final increase in pressure being in any case a characteristic of some pyrotechnic gas-generating sources.

The use of a pyrotechnic gas generating source is also advantageous over the use of gas stored under pressure in a container in that there is no risk of pressure leakage over time, nor any need for regular pressure checks.

## Claims

1. A gas supply system, comprising a pyrotechnic gas-generating source (6) for supplying gas under pressure through aspirating means (14) located in an ambient atmosphere so as to cause the aspirator means (14) to draw in gas from the ambient atmosphere which augments the supply of gas, characterised in that the pressure of the gas supplied by the pyrotechnic source (6) is selected so as substantially to correspond, for a significant proportion of the duration of gas generation, to the value ($P_m$) giving maximum efficiency of the aspirator means (14).

2. A system according to claim 1, characterised by means for feeding the augmented supply of gas to an object (5) to be inflated.

3. A system according to claim 2, characterised in that the pyrotechnic gas-generating source (6) is arranged to produre slightly augmented gas pressure (D) at the end of the said duration, so as to offset back-pressure generated in and by the inflatable object (5).

4. A system according to claim 2 or 3, characterised in that the inflatable object is an inflatable water craft or an escape chute for an aircraft.

5. A system according to any preceding claim, characterised in that the gas-generating source (6) includes a pyrotechnically ignitable sodium azide composition.

6. A method of inflating an inflatable object (5), comprising the steps of pyrotechnically generating under pressure a supply of gas, feeding the gas at a controlled pressure in a partially confined path (14) within the atmosphere so as to draw in atmospheric air by aspiration, and feeding the gas and the drawn-in atmospheric air into the object (5) to be inflated, characterised in that the controlled pressure of the gas is substantially constant during its generation and corresponds to the value ($P_m$) providing maximum efficiency of aspiration.

7. A method according to claim 6, characterised in that the pressure under which the supply of gas is generated is slightly augmented immediately before the end of its generation, so as to offset back-pressure generated in and by the inflatable object (5).

Fig.1.

Fig.2.

Fig.3.

**European Patent Office**

## EUROPEAN SEARCH REPORT

Application Number

EP 91 30 6298

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 909 549 (POOLE)<br>* Abstract; columns 1-7; column 8, lines 1-13 *<br>--- | 1-2,5-6 | F 42 B    3/04<br>B 64 D   25/14<br>B 63 C    9/22 |
| A | US-A-3 868 125 (FISHER)<br>* Column 2, lines 17-68; column 3, lines 1-17; figure 1 *<br>--- | 1,6 | |
| A | US-A-3 791 669 (HAMILTON)<br>* Abstract; column 1, lines 50-51 *<br>--- | 1,3,6,7 | |
| A | US-A-3 773 351 (CATANZARITE)<br>* Abstract *<br>--- | 1,6 | |
| A | FR-A-2 097 892 (KLIPPAN)<br>* Page 2, lines 7-27; page 3; figures 1-3 *<br>--- | 1,6 | |
| A | EP-A-0 046 275 (GOODRICH)<br>* Abstract *<br>----- | 1,4,6 | |
| | | | TECHNICAL FIELDS SEARCHED (Int. Cl.5)<br><br>F 42 B<br>B 60 R<br>B 64 D<br>B 63 C |

The present search report has been drawn up for all claims

| Place of search | Date of completion of the search | Examiner |
|---|---|---|
| THE HAGUE | 05-09-1991 | RODOLAUSSE P.E.C.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)